# EUROPEAN PATENT SPECIFICATION

(11) **EP 2 056 312 B1**
(45) Date of publication and mention of the grant of the patent: **31.10.2018**
(21) Application number: 08253561.8
(22) Date of filing: 30.10.2008
(51) Int. Cl.: H01G 11/24, H01G 11/36

(54) **Electrochemical capacitor with carbon nanotubes**
Elektrochemischer Kondensator mit Kohlenstoffnanoröhrchen
Condensateur électrochimique doté de nanotubes de carbone

(30) Priority: 02.11.2007 CN 200710124246; 02.11.2007 CN 200710124250; 27.12.2007 CN 200710305832
(43) Date of publication of application: 06.05.2009
(73) Proprietor: Tsinghua University, Haidian District, Beijing 100084 (CN); Hon Hai Precision Co., Ltd, Tu-cheng City, Taipei Hsien Taiwan, ROC (CN)
(72) Inventor: Liu, Chang-Hong, Beijing City (CN); Jiang, Kai-Li, Beijing City (CN); Wang, Ding, Beijing City (CN); Fan, Shou-Shan, Beijing City (CN)
(74) Representative: Stuttard, Garry Philip

(56) References cited:
- EP-A- 1 146 527
- WO-A-2007/047185
- JP-A- 2005 286 008
- US-A1- 2002 172 639
- US-A1- 2003 185 741
- US-A1- 2006 098 389
- US-A1- 2007 076 349
- FRACKOWIAK E ET AL: "Electrochemical storage of energy in carbon nanotubes and nanostructured carbons" CARBON, ELSEVIER, OXFORD, GB, vol. 40, no. 10, 1 August 2002 (2002-08-01), pages 1775-1787, XP004371677 ISSN: 0008-6223

## Description

### 1. Field of the Invention

The invention relates to capacitors, particularly, to an electrochemical capacitor with carbon nanotubes.

### 2. Discussion of Related Art

Conventionally, capacitors used in electric circuits include electrolytic capacitor, ceramic capacitors, and like. Capacitors provide energy storage as other energy storage devices, such as batteries or fuel cells. Capacitors store energy in the electric field between two oppositely charged parallel plates, which are separated by an insulator. The amount of energy a capacitor can store increases as the area of conducting plate increases, the distance between the plates decreases, and the dielectric constant of the insulating material increases. The electrolytic capacitor stores energy by charge separation across a thin insulating oxide film that is often formed by a controlled electrolytic oxidation process at an appropriate metal. Generally, a volumetric capacitance density of electrolytic capacitor is improved by using porous electrodes to create a large effective plate area.

Carbon nanotubes (CNTs) produced by means of arc discharge between graphite rods were first discovered and reported in an article by Sumio Iijima, entitled "Helical Microtubules of Graphitic Carbon" (Nature, Vol. 354, Nov. 7, 1991, pp.56-58). One of the characteristics of carbon nanotubes resides in that the aspect ratio of length to diameter is very large. In addition, the electric conductivity of carbon nanotubes is very high and allows a current flow at a current density of 100 MA/cm.sup.2 or more. Carbon nanotubes excel not only in electrical characteristics but also in mechanical characteristics. That is, the carbon nanotubes are distinctively tough, as attested by their Young's modul exceeding 1 TPa, which belies their extreme lightness resulting from being formed solely of carbon atoms. Further the carbon nanotubes have high elasticity, high resiliency and high chemical stability. These various and excellent characteristics tend to make carbon nanotubes ideal candidates for being used in field emission electronic devices, flat displays, as a hydrogen storage, and the like. JP2005-286008A discloses an electrolytic capacitor comprising a carbon nanotube structure with parallel carbon nanotubes.

A new type of electrolytic capacitor using carbon nanotubes is disclosed. However, these carbon nanotubes are merely in contact with one another in a parent material. Therefore, it is difficult for the carbon nanotubes to provide stable electric conductivity and higher volumetric capacitance density.

What is needed, therefore, is a flexible electrolytic capacitor, which has stable and high electric conductivity, good charging/discharging property, and high volumetric capacitance density.

Thus viewed from a first aspect the present invention provides an electrolytic capacitor comprising:
a first electrode;
a second electrode opposite to the first electrode, wherein at least one of the first electrode and the second electrode comprises a carbon nanotube structure;
a separator sandwiched between the first electrode and the second electrode;
a container accommodating the first electrode, the second electrode and the separator; and
an electrolytic solution in an inner space of the container, and the first electrode, the second electrode and the separator are immersed into the electrolytic solution;
wherein the characterized feature is that the carbon nanotube structure comprises at least one carbon nanotube film or at least one carbon nanotube wire, the carbon nanotube film or at least one carbon nanotube wire is formed by drawing from an array of carbon nanotubes, and the carbon nanotube film or at least one carbon nanotube wire comprises a plurality of successive carbon nanotubes joined end to end by van der Walls attractive force therebetween and the carbon nanotubes therein are primarily aligned along a same direction.

Viewed from a further aspect the present invention provides an electrolytic capacitor comprising:
a first electrode;
a second electrode opposite to the first electrode, wherein at least one of the first electrode and the second electrode comprises a carbon nanotube structure;
a separator sandwiched between the first electrode and the second electrode, and all of the first electrode, the second electrode and the separator are located in an
a separator sandwiched between the first electrode and the second electrode, and all of the first electrode, the second electrode and the separator are located in an electrical-chemical environment;
wherein the characterized feature is that the carbon nanotube structure comprises at least one carbon nanotube film or at least one carbon nanotube wire, the carbon nanotube film or at least one carbon nanotube wire is formed by drawing from an array of carbon nanotubes, and the carbon nanotube film or at least one carbon nanotube wire comprises a plurality of successive carbon nanotubes joined end to end by van der Walls attractive force therebetween and the carbon nanotubes therein are primarily aligned along a same direction.

Many aspects of the present electrolytic capacitor and the method for making the same can be better understood with references to the following drawings. The components in the drawings are not necessarily drawn to scale, the emphasis instead being placed upon clearly illustrating the principles of the present electrolytic capacitor and the method for making the same.
FIG. 1 is a schematic view of an electrolytic capacitor in accordance with the first embodiment.
FIG. 2 is a Scanning Electron Microscope (SEM) image of the drawing carbon nanotube film obtained by pulling an array of carbon nanotubes.
FIG. 3 is a structural schematic of a carbon nanotube segment.
FIG. 4 is a Scanning Electron Microscope (SEM) image of a untwisted carbon nanotube wire.
FIG. 5 is a Scanning Electron Microscope (SEM) image of a twisted carbon nanotube wire.
FIG. 6 is a Scanning Electron Microscope (SEM) image of the pressing carbon nanotube film obtained by pressing an array of carbon nanotubes with a planar pressure head.
   pressure head.
FIG. 7 is a Scanning Electron Microscope (SEM) image of the pressing carbon nanotube film obtained by pressing an array of carbon nanotubes with a roller-shaped pressure head.
FIG. 8 is a Scanning Electron Microscope (SEM) image of the flocculent carbon nanotube film.
FIG. 9 is a charging/discharging graph of the present electrolytic capacitor.
FIG. 10 is a flow chart of a method for making the electrolytic capacitor shown in FIG. 1.
FIG. 11 is a macrostructure photograph of the carbon nanotube film obtained by pressing an array of carbon nanotubes.
FIG. 12 is a photograph of a carbon nanotube flocculent structure in accordance with the present embodiment.
FIG. 13 is a photograph of a carbon nanotube film folded without rapture in accordance with the present embodiment.

Corresponding reference characters indicate corresponding parts throughout the several views. The exemplifications set out herein illustrate at least one present embodiment of the electrolytic capacitor and the method for making the same, in at least one form, and such exemplifications are not to be construed as limiting the scope of the invention in any manner.

### DETAILED DESCRIPTION OF EXEMPLARY EMBODIMENTS

References will now be made to the drawings, in detail, to describe embodiments of the electrolytic capacitor and the method for making the same.

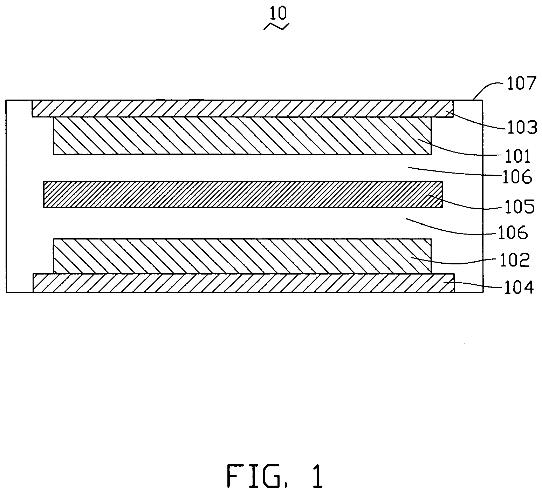

Referring to FIG. 1, an electrolytic capacitor 10 includes a first electrode 101, a second electrode 102, a first current collector 103, a second current collector 104, a separator 105, an electrolytic solution 106 and a container 107. The first current collector 103 is disposed opposite to the second current collector 104. The separator 105 is disposed between the first current collector 103 and the second current collector 104. The first electrode 101 is disposed between the first current collector 103 and the separator 105. The first electrode 101 is disposed on a surface of the first current collector 103. The second electrode 102 is disposed between the second current collector 104 and the separator 105. The second electrode 102 is disposed on a surface of the second current collector 104. The container 107 accommodates all above elements therein.

The container 107 is optional. In the present embodiment, the container 107 is made of glass or metal et al. The inner space of the container 107 is filled with the electrolytic solution 106, and the first electrode 101, the second electrode 102, the first current collector 103, the second current collector 104 and the separator 105 are immersed into the electrolytic solution 106.

The separator 105 is an insulating porous material, composed of polymer material such as polyethylene, polypropylene, and polyolefin, or of nonwoven fiber material such as cellulose, polyester, and polypropylene. The separator 105 is configured for preventing electrical contact between the first electrode 101 and second electrode 102 and allowing the ions there through.

The electrolytic solution 106 can be anyone of known electrolytic solutions used in electrochemical capacitors, such as aqueous electrolytic solution or organic electrolytic solution. In the present embodiment, the electrolytic solution 106 is a aqueous solution of NaOH. The separator 105 and the electrolytic solution 106 are used to provide a electrical-chemical environment.

At least one of the first electrode 101 and second electrode 102 includes a carbon nanotube structure. In the present embodiment, both the first electrode 101 and second electrode 102 include a carbon nanotube structure. The carbon nanotube structure includes a plurality of carbon nanotubes distributed uniformly. A plurality of carbon nanotubes are arrayed orderly or disorderly in the carbon nanotube structure. The carbon nanotubes in the carbon nanotube structure can be selected from the group comprising single-walled carbon nanotubes, double-walled carbon nanotubes, and multi-walled carbon nanotubes. A diameter of each single-walled carbon nanotube approximately ranges from 0.5 to 50 nanometers. A diameter of each double-walled carbon nanotube approximately ranges from 1 to 50 nanometers. A diameter of each multi-walled carbon nanotube approximately ranges from 1.5 to 50 nanometers. A length of the carbon nanotubes is larger than 50 micrometers. A length of the carbon nanotubes ranges approximately from 200 micrometers to 900 micrometers in the first embodiment. The carbon nanotube structure can includes carbon nanotube films obtained by pulling an array of carbon nanotubes, twisted or untwisted carbon nanotube wires, carbon nanotube films obtained by pressing an array of carbon nanotubes, carbon nanotube films obtained by flocculent, or combination thereof.

The carbon nanotube structure includes at least one carbon nanotube layer. The carbon nanotube layers can be arranged side by side to form a coplanar layer, or can be overlapped or stacked with each other. Adjacent stacked carbon nanotube layers can combine to each other by van der Waals attractive force therebetween. Each carbon nanotube layer can include at least one carbon nanotube film, at least one carbon nanotube wire, or combinations thereof. A plurality of carbon nanotube wires can disposed side by side, disposed crossed, or weaved together to form the carbon nanotube layer. A plurality of carbon nanotube films can be overlapped or stacked with each other to form the carbon nanotube layer. When the carbon nanotube structure includes carbon nanotube films and carbon nanotube wires, the carbon nanotube wires can be disposed on a surface of the carbon nanotube film.

The area and thickness of the carbon nanotube structure is unlimited and could be made according to user's specific needs. Various areas and thickness of carbon nanotube structures are obtained by placing one layer or at least two carbon nanotube layers side-by-side and/or stacking a plurality of carbon nanotube layers. The area of the carbon nanotube structure is determined by the number and size of carbon nanotube films/wires in each carbon nanotube layer. Additionally, the thickness of the carbon nanotube structure is determined by the number and thickness of carbon nanotube layers in the carbon nanotube structure.

The carbon nanotube film can be an ordered film or a disordered film. In this specification, the "disordered" means the align direction of the carbon nanotubes are random, thus, in the disordered carbon nanotube film, the numbers of the carbon nanotubes aligned in every directions in the film are equal. In this specification, the "ordered" means the align direction of at least the majority of the carbon nanotubes has a predetermined regulation (e.g., the carbon nanotubes are aligned substantially along one direction or several directions). In the disordered film, the carbon nanotubes are disordered or isotropic. The disordered carbon nanotubes entangle with each other. The isotropic carbon nanotubes are substantially parallel to a surface of the carbon nanotube film. In the ordered film, the carbon nanotubes are primarily oriented along a same direction in each film and substantially parallel to a surface of the carbon nanotube film. Different stratums/layers of films can have the carbon nanotubes offset from the carbon nanotubes in other films. The carbon nanotube film can be a flocculent carbon nanotube film, a pressing carbon nanotube film, or a drawing carbon nanotube film.

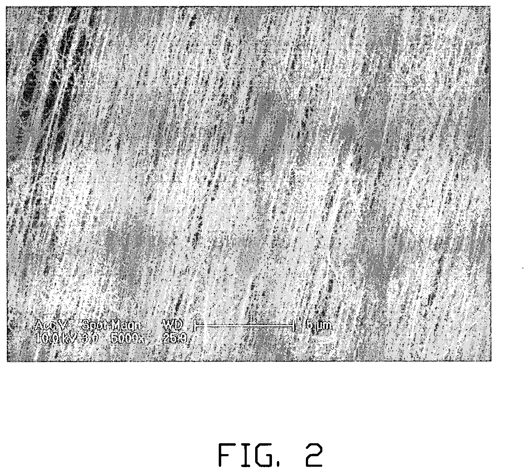

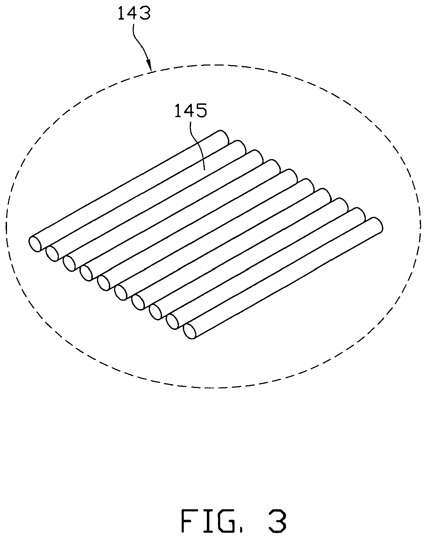

Referring to FIG. 2 the drawing carbon nanotube film includes a plurality of carbon nanotubes joined successively end-to-end by van der Waals attractive force therebetween. The "drawing" means the carbon nanotube film is drawn from a supper-aligned carbon nanotube array. The drawing carbon nanotube film can be a free-standing carbon nanotube film. Typically, the carbon nanotubes in each drawing carbon nanotube film are aligned substantially parallel to a same direction (i.e., the drawing carbon nanotube film is an ordered film). More specifically, referring to FIG. 3, the drawing carbon nanotube film comprises a plurality of successively oriented carbon nanotube segments 143 joined end-to-end by van der Waals attractive force therebetween. Each carbon nanotube segment 143 includes a plurality of carbon nanotubes 145 parallel to each other, and combined by van der Waals attractive force therebetween. The carbon nanotube segments 143 can vary in width, thickness, uniformity and shape. The carbon nanotubes 145 in the carbon nanotube segment 143 are also oriented along a preferred orientation. The thickness of the drawing carbon nanotube film approximately ranges from 0.5 nanometers to 100 micrometers. In the drawing carbon nanotube film, the majority of carbon nanotubes are arranged along a primary direction; however, the orientation of some of the nanotubes may vary. The aligned direction of the carbon nanotubes in any two adjacent drawing carbon nanotube films form an angle α, where 0 ≦ α≦ 90°. Thus, the carbon nanotube structure includes a plurality of micropores distributed in the carbon nanotube structure uniformly. Diameters of the micropores approximately range from 1 to 500 nanometers. It is to be understood that there can be some variation in the carbon nanotube structures.

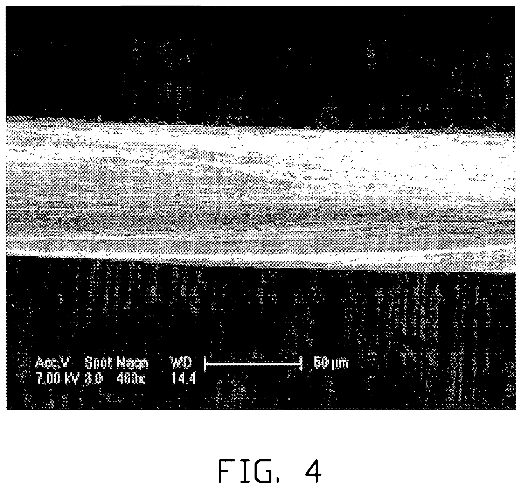

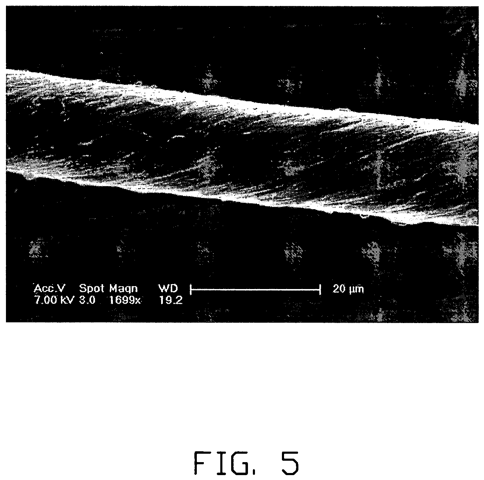

The carbon nanotube wire used can be twisted or untwisted. The untwisted carbon nanotube wire is also drawn from a carbon nanotube array. The twisted carbon nanotube wire is twisted from the untwisted carbon nanotube wire or the carbon nanotube film. Referring to FIG. 4, the untwisted carbon nanotube wire can be composed of a plurality of successive carbon nanotubes joined end to end by van der Waals attractive force therebetween, and oriented along a same direction (i.e., a direction along the length of the wire). There are one or more carbon nanotubes in thickness of the untwisted carbon nanotube wire. Referring to FIG. 5, the twisted carbon nanotube wire can be composed of a plurality of successive twist carbon nanotubes joined end to end by van der Waals attractive force therebetween, and oriented around an axial direction of the carbon nanotube wire. While the twisted carbon nanotube wire is twisted from the disordered carbon nanotube film, the twisted carbon nanotube wire can be composed of a plurality of entangled carbon nanotubes.

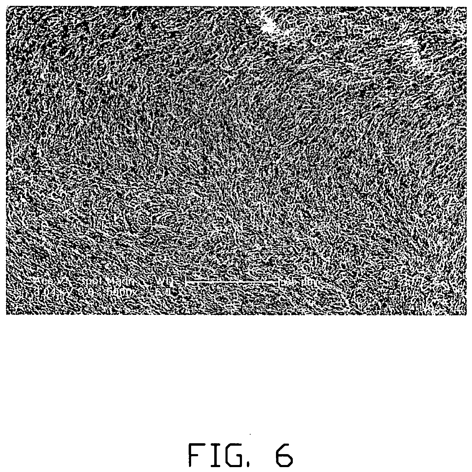

Length of the twisted/untwisted carbon nanotube wire can be arbitrarily set as desired. A diameter of each carbon nanotube string is in an approximate range from 0.5 nanometers to 100 micrometers (µm). In the carbon nanotube layer, distances between adjacent carbon nanotube wires are in an approximate range from 10 nanometers to 10 microns. Micropores can be defined by adjacent crossed or weaved carbon nanotube wires. A diameter of the micropores is less than about 10 micron. The embodiment of FIG. 6 is not part of the invention but represent background art that is useful for understanding the invention.

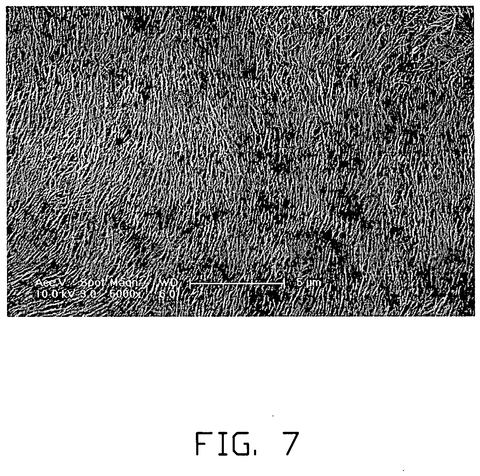

Referring to FIG. 6 and 7, the pressing carbon nanotube film can be a free-standing carbon nanotube film. The "pressing" carbon nanotube film means the carbon nanotube film is formed by a pressing a carbon nanotube array. The carbon nanotubes in the pressing carbon nanotube film are arranged isotropically, arranged along a same direction or arranged along different directions. An angle between a primary alignment direction of the carbon nanotubes in the carbon nanotube film and the carbon nanotube film is 0 ° to approximately 15 ° when measured from the surface of the pressing carbon nanotube film. The pressing carbon nanotube film can be formed by pressing an array of carbon nanotubes. The angle is closely related to pressure applied to the array of carbon nanotubes. The greater the pressure, the smaller the angle. The carbon nanotubes in the carbon nanotube structure can parallel to the surface of the pressing carbon nanotube film when the angle is 0 °. A length and a width of the pressing carbon nanotube film can be arbitrarily set as desired. A thickness of the pressing carbon nanotube film is in an approximate range from 0.5 nanometers to 1 millimeter. The pressing carbon nanotube film includes a plurality of micropores. A diameter of the micropores is less than about 10 micron.

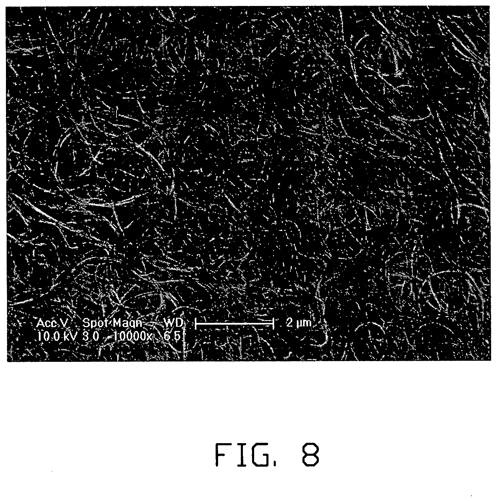

Referring to FIG. 8, the flocculent carbon nanotube film includes a plurality of carbon nanotubes entangled with each other. The "flocculent" carbon nanotube film means the carbon nanotube film is formed by a flocculating method. The adjacent carbon nanotubes are combined and entangled by van der Waals attractive force therebetween, thereby forming an entangled structure/microporous structure. Further, the carbon nanotubes in the flocculent carbon nanotube film are isotropic. The flocculent carbon nanotube film includes a plurality of micropores defined by the disordered carbon nanotubes. Sizes of the micropores are less than 10 micrometers. Length and width of the flocculent carbon nanotube film are not limited. A thickness of the flocculent carbon nanotube layer approximately ranges from 0.5 nanometers to 1 millimeter. The embodiment of FIG. 8 is not part of the invention but represent background art that is useful for understanding the invention.

The first current collector 103 and the second current collector 104 are optional due to the excellent conductive property of the carbon nanotube structure. The first current collector 103 and the second current collector 104 are made of conductive materials such as metal, graphite et al. The shape and the thickness of the current collector are arbitrary, and can be selected according to practical need. In the present embodiment the current collector is a copper sheet. The carbon nanotube structure is disposed on the current collector directly or bonded on the current collector by an adhesive.

Compared with the conventional electrolytic capacitor, the present electrolytic capacitor has the following advantages: firstly, the carbon nanotube structure has a high and stable electric conductive property, and the electrolytic capacitor has low internal resistance and good charging/discharging property. Secondly, the carbon nanotubes are uniformly dispersed in the carbon nanotube structure, and thus the electrolytic capacitor has good reproducibility. Thirdly, the carbon nanotube structure forms a porous structure, and then the interfacial surface area between the carbon nanotube structure and the electrolytic solution is high, which results in a high energy density and volumetric capacitance density of the electrolytic capacitor. Fourthly, the carbon nanotube structure is a thin and free-standing structure, and the electrolytic capacitor is flexible.

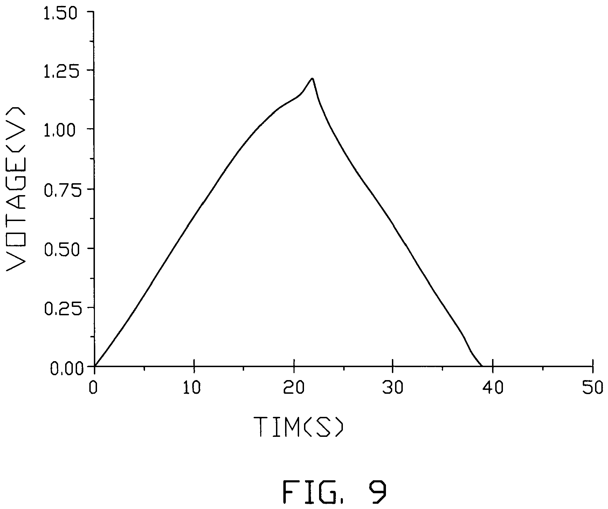

Referring to FIG. 9, the charging/discharging graph of the present electrolytic capacitor 10 shows a symmetrical structure under a current of 3 microamperes, and the present electrolytic capacitor has a good reproducibility. The volumetric capacitance density thereof is more than 100 farads per gram.

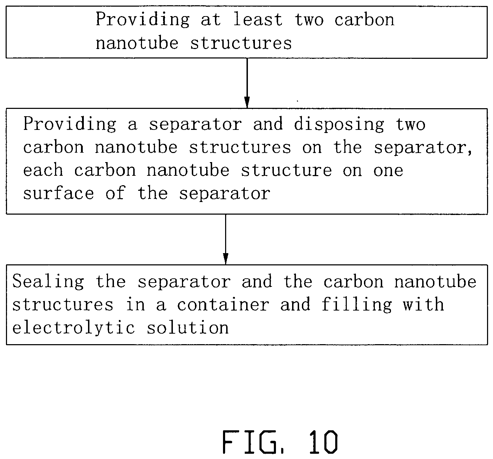

Referring to FIG. 10, a method for making the electrolytic capacitor is provided in the present embodiment. The method includes the steps of: (a) providing at least two carbon nanotube structures; (b) providing a separator and disposing two carbon nanotube structures on the separator, each carbon nanotube structure on one surface of the separator; and (c) sealing the separator and the carbon nanotube structures in a container and filling with electrolytic solution.

In step (a), the providing at least one carbon nanotube structure can include the substeps of: (a1) providing an array of carbon nanotubes; (a2) pulling out at least one carbon nanotube film from the array of carbon nanotubes by using a tool (e.g., adhesive tape, pliers, tweezers, or another tool allowing multiple carbon nanotubes to be gripped and pulled simultaneously); (a3) forming a carbon nanotube structure with the carbon nanotube films.

In step (a1), a given super-aligned array of carbon nanotubes can be formed by the substeps of: (a11) providing a substantially flat and smooth substrate; (a12) forming a catalyst layer on the substrate; (a13) annealing the substrate with the catalyst layer in air at a temperature approximately ranging from 700°C to 900°C for about 30 to 90 minutes; (al4) heating the substrate with the catalyst layer to a temperature approximately ranging from 500°C to 740°C in a furnace with a protective gas therein; and (a15) supplying a carbon source gas to the furnace for about 5 to 30 minutes and growing the super-aligned array of carbon nanotubes on the substrate.

In step (a11), the substrate can be a P-type silicon wafer, an N-type silicon wafer, or a silicon wafer with a film of silicon dioxide thereon. A 4-inch P-type silicon wafer is used as the substrate.

In step (a12), the catalyst can be made of iron (Fe), cobalt (Co), nickel (Ni), or any alloy thereof.

In step (a14), the protective gas can be made up of at least one of nitrogen (N₂), ammonia (NH₃), and a noble gas. In step (a15), the carbon source gas can be a hydrocarbon gas, such as ethylene (C₂H₄), methane (CH₄), acetylene (C₂H₂), ethane (C₂H₆), or any combination thereof.

The super-aligned array of carbon nanotubes can be approximately 200 to 400 micrometers in height, with the super-aligned array including a plurality of carbon nanotubes parallel to each other and approximately perpendicular to the substrate. The carbon nanotubes in the carbon nanotube film can be selected from the group comprising single-walled carbon nanotubes, double-walled carbon nanotubes, and multi-walled carbon nanotubes. A diameter of each single-walled carbon nanotube approximately ranges from 0.5 to 50 nanometers. A diameter of each double-walled carbon nanotube approximately ranges from 1 to 50 nanometers. A diameter of each multi-walled carbon nanotube approximately ranges from 1.5 to 50 nanometers.

The super-aligned array of carbon nanotubes formed under the above conditions is essentially free of impurities, such as carbonaceous or residual catalyst particles. The carbon nanotubes in the super-aligned array are closely packed together by van der Waals attractive force.

In step (a2), the carbon nanotube film can be formed by the substeps of: (a21) selecting a plurality of carbon nanotubes having a predetermined width from the super-aligned array of carbon nanotubes; and (a22) pulling the carbon nanotube segments, made of nanotube, at an even/uniform speed to achieve an uniform carbon nanotube film.

In step (a21), the carbon nanotube segments having a predetermined width can be selected by using an adhesive tape, such as the tool, to contact the super-aligned array. In step (a22), the pulling direction is substantially perpendicular to the growing direction of the super-aligned array of carbon nanotubes.

More specifically, during the pulling process, as the initial carbon nanotube segments are drawn out, other carbon nanotube segments are also drawn out end-to-end due to van der Waals attractive force between ends of adjacent segments. This process of drawing helps provide a continuous and uniform carbon nanotube film having a predetermined width can be formed. The carbon nanotube film includes a plurality of carbon nanotube segments containing a plurality of carbon nanotubes. The carbon nanotubes in the carbon nanotube film are all substantially parallel to the pulling/drawing direction of the carbon nanotube film, and the carbon nanotube film produced in such manner can be selectively formed to have a predetermined width. The carbon nanotube film formed by the pulling/drawing method has a superior uniformity of thickness and conductivity over a typically disordered carbon nanotube film. Furthermore, the pulling/drawing method is simple, fast, and suitable for industrial applications.

The width of the carbon nanotube film depends on a size of the array of carbon nanotubes. The length of the carbon nanotube film can be arbitrarily set as desired. In one useful embodiment, when the substrate is a 4-inch P-type silicon wafer, the width of the carbon nanotube film approximately ranges from 0.01 to 10 centimeters, while the thickness of the carbon nanotube film approximately ranges from 0.5 nanometers to 100 micrometers. The carbon nanotubes in the carbon nanotube film can be selected from the group comprising single-walled carbon nanotubes, double-walled carbon nanotubes, and multi-walled carbon nanotubes. Diameters of the single-walled carbon nanotubes approximately range from 0.5 to 50 nanometers. Diameters of the double-walled carbon nanotubes approximately range from 1 to 50 nanometers. Diameters of the multi-walled carbon nanotubes approximately range from 1.5 to 50 nanometers.

In step (a3), the step of forming a carbon nanotube film structure includes the substeps of: (a31) providing a substrate having a surface; (a32) attaching at least one carbon nanotube film onto the surface of the substrate; (a33) removing the unwanted carbon nanotube film; and (a34) removing the substrate to obtain the carbon nanotube film structure. In the present embodiment, the carbon nanotube film structure is obtained by placing at least two carbon nanotube films side-by-side and/or overlapping adjacent carbon nanotube films. At least two carbon nanotube films are located side-by-side form a carbon nanotube layer. It is to be understood in other embodiments that the carbon nanotube layer can comprise of multiple films with at least one nanotube film stacked upon another nanotube film. The carbon nanotube film structure, of the present embodiment, includes at least two stacking carbon nanotube layers. The alignment of the carbon nanotubes in any two adjacent carbon nanotube layers form an angle α, and 0≦ α≦ 90°. The angle α is 90° in the present embodiment.

The area of the substrate can be chosen according to the user-specific needs. The substrate can also be replaced with a frame. Because the carbon nanotubes in the super-aligned array of carbon nanotubes have a high purity and a high specific surface area, the carbon nanotube film is adherent in nature. As such, the carbon nanotube film can be directly adhered to the substrate or frame. The unwanted carbon nanotube film can be removed.

A step of treating the carbon nanotube film structure with an organic solvent is optional after step (a3). The organic solvent is volatilizable and can be selected from the group comprising ethanol, methanol, acetone, dichloroethane, chloroform, and any appropriate mixture thereof. In the present embodiment, the organic solvent is ethanol. Specifically, the carbon nanotube film structure can be treated through dripping organic solvent onto the surface of the carbon nanotube film structure or soaking the entire carbon nanotube film structure in an organic solvent. After being soaked by the organic solvent, microscopically, carbon nanotube strings will be formed by some adjacent carbon nanotubes bundling together, due to the surface tension of the organic solvent. In one aspect, due to the decrease of the specific surface area via bundling, the mechanical strength and toughness of the carbon nanotube film are increased and the coefficient of friction of the carbon nanotube films is reduced. Macroscopically, the film will be an approximately uniform carbon nanotube film.

It is to be understood that at least one carbon nanotube film or carbon nanotube yarn can be obtained in step (a2). Then a carbon nanotube string can be obtained by twisting the carbon nanotube film or carbon nanotube yarn. The carbon nanotube structure can be formed by disposing a plurality of carbon nanotube strings in parallel or crossed. Also, the carbon nanotube structure can be formed by circumvoluting a long carbon nanotube string.

In step (a), the providing at least one carbon nanotube structure can include the substeps of: (al') providing an array of carbon nanotubes; and (a2') providing a pressing device to press the array of carbon nanotubes, thereby forming a carbon nanotube film.

In step (a1'), the array of carbon nanotubes is super-aligned array of carbon nanotubes and formed by above-described step (a1)

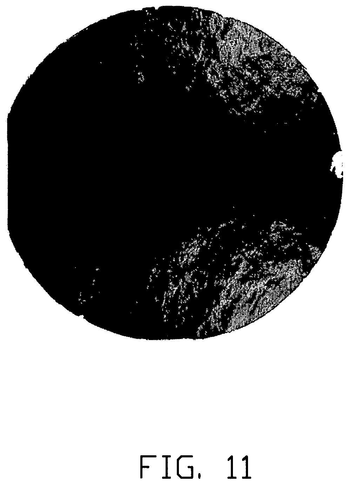

In step (a2'), a certain pressure can, beneficially, be applied to the array of carbon nanotubes by the pressing device. In the process of pressing, the carbon nanotubes in the array of carbon nanotubes form the carbon nanotube film under pressure. Quite suitably, the carbon nanotubes are nearly all parallel to a surface of the carbon nanotube film. Referring to FIG. 11, a macrostructure photograph of the carbon nanotube film produced in the present embodiment is provided. The carbon nanotube film is circular with a diameter of about 10 centimeters.

In the present embodiment, the pressing device can, advantageously, be a pressure head. The pressure head has a glossy surface. It is to be understood that, the shape of the pressure head and the pressing direction can, opportunely, determine the direction of the carbon nanotubes arranged therein. Specifically, referring to FIG. 6, when a planar pressure head is used to press the array of carbon nanotubes along the direction perpendicular to the substrate, a carbon nanotube film having a plurality of carbon nanotubes isotropically arranged can, advantageously, be obtained. Referring to FIG. 7, when a roller-shaped pressure head is used to press the array of carbon nanotubes along a fixed direction, a carbon nanotube film having a plurality of carbon nanotubes aligned along the fixed direction is obtained. When a roller-shaped pressure head is used to press the array of carbon nanotubes along different directions, a carbon nanotube film having a plurality of carbon nanotubes aligned along different directions is obtained.

Understandably, in the process of pressing, the carbon nanotubes will, slant, thereby forming a carbon nanotube film having a free-standing structure. The carbon nanotubes in the free-standing structure are nearly all parallel to a surface of the carbon nanotube film, and are isotropically arranged, arranged along a fixed direction, or arranged along different directions.

It is to be understood that, a degree of the slant of the carbon nanotubes in the carbon nanotube film is related to the pressure. The greater the pressure, the greater the degree of slant. A thickness of the carbon nanotube film is opportunely determined by the height of the array of carbon nanotubes and the pressure. That is, the higher the height of the array of carbon nanotubes and the less the pressure, the larger the thickness of the carbon nanotube film. The carbon nanotube film is free-standing, so it can be used as a carbon nanotube structure.

Understandably, in the present embodiment, the carbon nanotube film is obtained by pressing a pressing device on an array of carbon nanotubes. Due to the array of carbon nanotubes having a plurality of carbon nanotubes uniformly dispersed, the carbon nanotube film includes a plurality of carbon nanotubes uniformly dispersed, and has good mechanical strength and tensile strength, thereby easy to process. Thus, the carbon nanotube film can, opportunely be cut into most any desired shape. It can advantageously be applied to use in the electrolytic capacitor, especially, the micro-type electrolytic capacitor.

In step (a), the providing at least one carbon nanotube structure can include the substeps of: (a1") providing a raw material of carbon nanotubes; (a2") adding the raw material of carbon nanotubes to a solvent to get a flocculent structure; and (a3") separating the flocculent structure from the solvent, and shaping/molding the separated flocculent structure to obtain a carbon nanotube film.

In step (a1"), the raw material of carbon nanotubes can be made by Chemical Vapor Deposition (CVD), Laser Ablation, or Arc-Charge. In the present embodiment, a raw material of carbon nanotubes is an array of carbon nanotubes, quite suitably, a super-aligned array of carbon nanotubes. The array of carbon nanotubes is formed by a similar method as the above-described step (a1). The array of carbon nanotubes is scraped from the substrate by a knife or other similar devices to obtain the raw material of carbon nanotubes. Such a raw material is, to a certain degree, able to maintain the bundled state of the carbon nanotubes.

In step (a2"), the solvent is selected from the group consisting of water and volatile organic solvent. After adding the raw material of carbon nanotubes to the solvent, a process of flocculating is executed to get the flocculent structure. The process of flocculating is selected from the group consisting of ultrasonic dispersion and high-strength agitating/vibrating. Quite usefully, in this embodiment ultrasonic dispersion is used to flocculate the solvent containing the carbon nanotubes for about 10∼30 minutes. Due to the carbon nanotubes in the solvent having a large specific surface area and the bundled carbon nanotubes having a large van der Waals attractive force, the flocculated and bundled carbon nanotubes form a network structure (i.e., flocculent structure).

In step (a3"), the process of separating the flocculent structure from the solvent includes the substeps of: (a3"1) pouring the solvent containing the flocculent structure through a filter into a funnel; and (a3"2) drying the flocculent structure on the filter to obtain the separated flocculent structure of carbon nanotubes.

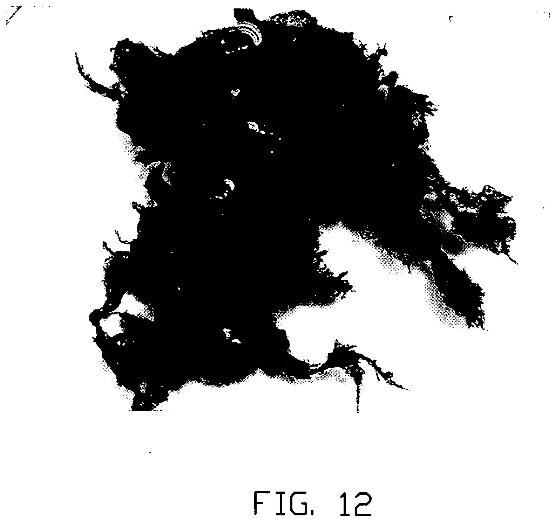

In step (a3"2), a time of drying can be selected according to practical needs. Referring to FIG. 12, the flocculent structure of carbon nanotubes on the filter is bundled together, so as to form an irregular flocculate structure.

In step (a3"), the process of shaping/molding includes the substeps of: (a3"3) putting the separated flocculent structure into a container (not shown), and spreading the flocculent structure to form a predetermined structure; (a3"4) pressing the spread flocculent structure with a certain pressure to yield a desirable shape; and (a3"5) drying the spread flocculent structure to remove the residual solvent or volatilizing the residual solvent to form a carbon nanotube film.

It is to be understood that the size of the spread flocculent structure is used to control a thickness and a surface density of the carbon nanotube film. As such, the larger the area of a given amount of the flocculent structure is spread over, the less the thickness and density of the carbon nanotube film.

The carbon nanotubes in the carbon nanotube film entangled to each other provides strength to the carbon nanotube film. Therefore, the carbon nanotube film is easy to be folded and/or bent into arbitrary shapes without rupture. In the embodiment, the thickness of the carbon nanotube film is in the approximate range from 1 micrometer to 2 millimeters, and the width of the carbon nanotube film is in the approximate range from 1 millimeter to 10 centimeters.

Further, the step (a3") can be accomplished by a process of pumping filtration to obtain the carbon nanotube film. The process of pumping filtration includes the substeps of: (a3"6) providing a microporous membrane and an air-pumping funnel; (a3"7) filtering the solvent containing the flocculent structure of carbon nanotubes through the microporous membrane into the air-pumping funnel; and (a3"8) air-pumping and drying the flocculent structure of carbon nanotubes captured on the microporous membrane.

In step (a3"6), the microporous membrane has a smooth surface. And the diameters of micropores in the membrane are about 0.22 microns. The pumping filtration can exert air pressure on the flocculent structure, thus, forming an uniform carbon nanotube film. Moreover, due to the microporous membrane having a smooth surface, the carbon nanotube film can be easily separated from the membrane.

The carbon nanotube film produced by the method has the following virtues. Firstly, through flocculating, the carbon nanotubes are bundled together by van der Walls attractive force to form a network structure/flocculent structure. Thus, the carbon nanotube film is very durable. Secondly, the carbon nanotube film is very simply and efficiently produced by the method. A result of the production process of the method, is that thickness and surface density of the carbon nanotube film are controllable.

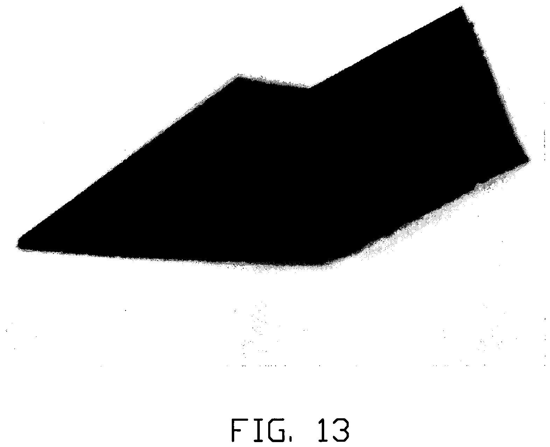

The adjacent carbon nanotubes are combined and tangled by van der Waals attractive force, thereby forming a network structure/microporous structure. Thus, the carbon nanotube film has good tensile strength. Referring to FIG. 13, the carbon nanotube film obtained in the present embodiment is folded without rapture. As such, the carbon nanotube film is easy to process, and can be folded in most any desired shape. The carbon nanotube film is free-standing, so it can be used as a carbon nanotube structure.

In practical use, the carbon nanotube film can be cut into any desired shape and size. As such, it is easily applied to use in an electrolytic capacitor, especially, in a micro-type of electrolytic capacitor.

In step (b), the carbon nanotube structure can be disposed on the surface of the separator by heat pressing process or an adhesive. Also, the carbon nanotube structure can be attached on the surface of the separator directly.

A optional step (d) of disposing current collector is performed after step (b).

It is to be understood that the above-described embodiments are intended to illustrate rather than limit the invention. Variations may be made to the embodiments without departing from the spirit of the invention as claimed. The above-described embodiments illustrate the scope of the invention but do not restrict the scope of the invention.

It is also to be understood that the above description and the claims drawn to a method may include some indication in reference to certain steps. However, the indication used is only to be viewed for identification purposes and not as a suggestion as to an order for the steps.

## Claims

1. An electrolytic capacitor (10) comprising:
a first electrode (101);
a second electrode (102) opposite to the first electrode (101), wherein at least one of the first electrode (101) and the second electrode (102) comprises a carbon nanotube structure;
a separator (105) sandwiched between the first electrode (101) and the second electrode (102);
a container (107) accommodating the first electrode (101), the second electrode (102) and the separator (105); and
an electrolytic solution (106) in an inner space of the container (107), and the first electrode (101), the second electrode (102) and the separator (105) are immersed into the electrolytic solution (106);
**characterized in that** the carbon nanotube structure comprises at least one carbon nanotube film or at least one carbon nanotube wire, the carbon nanotube film or at least one carbon nanotube wire is formed by drawing from an array of carbon nanotubes, and the carbon nanotube film or at least one carbon nanotube wire comprises a plurality of successive carbon nanotubes joined end to end by van der Walls attractive force therebetween and the carbon nanotubes therein are primarily aligned along a same direction.

2. The electrolytic capacitor according to claim 1, wherein the carbon nanotube structure comprises at least two carbon nanotube films stacked with each other, and an angle between the aligned directions of the carbon nanotubes in the two adjacent carbon nanotube films approximately ranges from above or equal to 0 ° to less than or equal to 90°.

3. The electrolytic capacitor according to claim 2, wherein the angle between the aligned directions of the carbon nanotubes in the two adjacent carbon nanotube films is equal to 90 ° and a plurality of micropores are defined in the carbon nanotube structure, and diameters of the micropores approximately range from 1 nanometer to 500 nanometers.

4. The electrolytic capacitor according to any one of claims 1 to 3, wherein the separator (105) is an insulating porous material.

5. The electrolytic capacitor according to any one of claims 1 to 4, wherein the electrolytic solution (106) is aqueous electrolytic solution or organic electrolytic solution.

6. The electrolytic capacitor according to any one of claims 1 to 5, further comprising a first current collector (103) and a second current collector (104), the first current collector (103) is located on a surface of the first electrode (101) far away from the separator (105), and the second current collector (104) is located on a surface of the second electrode (102) far away from the separator (105).

7. The electrolytic capacitor according to any one of claims 2 to 6, wherein the carbon nanotube structure further comprises at least one carbon nanotube wire, and the carbon nanotube wire is disposed on at least one surface of the carbon nanotube film.

8. The electrolytic capacitor according to claim 7, wherein the carbon nanotube structure comprises a plurality of carbon nanotube wires, and the carbon nanotube wires are disposed side by side, disposed crossed, or waved together.

9. The electrolytic capacitor according to any one of claims 7-8, wherein the carbon nanotube wire is an untwisted carbon nanotube wire, and the untwisted carbon nanotube wire is composed of a plurality of successive carbon nanotubes joined end to end, and oriented along a same direction.

10. The electrolytic capacitor according to any one of claims 7-8, wherein the carbon nanotube wire is a twisted carbon nanotube wire, and the twisted carbon nanotube wire is composed of a plurality of successive twist carbon nanotubes joined end to end, and oriented around an axial direction of the carbon nanotube wire.

11. The electrolytic capacitor according to claim 1, wherein the carbon nanotube structure comprises a plurality of carbon nanotube wires, and the carbon nanotube wires are disposed side by side, disposed crossed, or waved together.

12. The electrolytic capacitor according to claim 11, wherein a plurality of micropores are defined by adjacent crossed or waved carbon nanotube wires, and a diameter of the micropores is less than about 10 micron.

13. An electrolytic capacitor comprising:
a first electrode;
a second electrode opposite to the first electrode, wherein at least one of the first electrode and the second electrode comprises a carbon nanotube structure;
a separator sandwiched between the first electrode and the second electrode, and all of the first electrode, the second electrode and the separator are located in an electrical-chemical environment;
**characterized in that** the carbon nanotube structure comprises at least one carbon nanotube film or at least one carbon nanotube wire, the carbon nanotube film or at least one carbon nanotube wire is formed by drawing from an array of carbon nanotubes, and the carbon nanotube film or at least one carbon nanotube wire comprises a plurality of successive carbon nanotubes joined end to end by van der Walls attractive force therebetween and the carbon nanotubes therein are primarily aligned along a same direction.

## Patentansprüche

1. Elektrolytkondensator (10), umfassend:
eine erste Elektrode (101);
eine zweite Elektrode (102) gegenüber der ersten Elektrode (101), wobei zumindest eine von der ersten Elektrode und der zweiten Elektrode (102) eine Kohlenstoffnanoröhrchenstruktur umfasst;
ein Separator (105), eingeschoben zwischen der ersten Elektrode (101) und der zweiten Elektrode (102);
ein Behälter (107), der die erste Elektrode (101), die zweite Elektrode (102) und den Separator (105) beherbergt; und
eine Elektrolytlösung (106) in einem Innenraum des Behälters (107), und die erste Elektrode (101), die zweite Elektrode (102) und der Separator (105) sind in die Elektrolytlösung (106) eingetaucht;
**dadurch gekennzeichnet, dass** die Kohlenstoffnanoröhrchenstruktur zumindest eine Kohlenstoffnanoröhrchenschicht oder zumindest einen Kohlenstoffnanoröhrchendraht umfasst, die Kohlenstoffnanoröhrchenschicht oder zumindest ein Kohlenstoffnanoröhrchendraht durch Ziehen aus einer Anordnung von Kohlenstoffnanoröhrchen gebildet ist, und die Kohlenstoffnanoröhrchenschicht oder zumindest ein Kohlenstoffnanoröhrchendraht eine Vielzahl von aufeinanderfolgenden Kohlenstoffnanoröhrchen umfasst, die Ende-an-Ende mittels Van-der-Waals-Anziehungskraft dazwischen verbunden sind und die Kohlenstoffnanoröhrchen darin hauptsächlich entlang einer gleichen Richtung ausgerichtet sind.

2. Elektrolytkondensator nach Anspruch 1, wobei die Kohlenstoffnanoröhrchenstruktur zumindest zwei aufeinander gestapelte Kohlenstoffnanoröhrchenschichten umfasst, und ein Winkel zwischen den ausgerichteten Richtungen der Kohlenstoffnanoröhrchen in den zwei angrenzenden Kohlenstoffnanoröhrchenschichten sich in etwa von mehr als oder gleich 0° bis zu weniger als oder gleich 90° erstreckt.

3. Elektrolytkondensator nach Anspruch 2, wobei der Winkel zwischen den ausgerichteten Richtungen der Kohlenstoffnanoröhrchen in den zwei angrenzenden Kohlenstoffnanoröhrchenschichten gleich 90° ist und eine Vielzahl von Mikroporen in der Kohlenstoffnanoröhrchenstruktur definiert sind und sich Durchmesser der Mikroporen ungefähr von 1 Nanometer bis 500 Nanometer erstrecken.

4. Elektrolytkondensator nach einem der Ansprüche 1-3, wobei der Separator (105) ein isolierendes poröses Material ist.

5. Elektrolytkondensator nach einem der Ansprüche 1 bis 4, wobei die Elektrolytlösung (106) eine wässrige Elektrolytlösung oder eine organische Elektrolytlösung ist.

6. Elektrolytkondensator nach einem der Ansprüche 1 bis 5, zusätzlich einen ersten Stromabnehmer (103) und einen zweiten Stromabnehmer (104) umfassend, wobei sich der erste Stromabnehmer (103) auf einer Oberfläche des ersten Elektrode (101) weit entfernt vom Separator (105) befindet, und der zweite Stromabnehmer (104) sich auf einer Oberfläche der zweiten Elektrode (102) weit entfernt vom Separator (105) befindet.

7. Elektrolytkondensator nach einem der Ansprüche 2 bis 6, wobei die Kohlenstoffnanoröhrchenstruktur weiterhin zumindest einen Kohlenstoffnanoröhrchendraht umfasst, und der Kohlenstoffnanoröhrchendraht auf zumindest einer Oberfläche der Kohlenstoffnanoröhrchenschicht angeordnet ist.

8. Elektrolytkondensator nach Anspruch 7, wobei die Kohlenstoffnanoröhrchenstruktur eine Vielzahl von Kohlenstoffnanoröhrchendrähten umfasst und die Kohlenstoffnanoröhrchendrähte Seite an Seite angeordnet, über Kreuz angeordnet, oder zusammengewellt sind.

9. Elektrolytkondensator nach einem der Ansprüche 7-8, wobei der Kohlenstoffnanoröhrchendraht ein unverdrillter Kohlenstoffnanoröhrchendraht ist, und der unverdrillte Kohlenstoffnanoröhrchendraht aus einer Vielzahl von aufeinanderfolgenden Kohlenstoffnanoröhrchen besteht, die Ende-an-Ende verbunden und entlang einer gleichen Richtung orientiert sind.

10. Elektrolytkondensator nach einem der Ansprüche 7-8, wobei der Kohlenstoffnanoröhrchendraht ein verdrillter Kohlenstoffnanoröhrchendraht ist, und der verdrillte Kohlenstoffnanoröhrchendraht aus einer Vielzahl von aufeinanderfolgenden verdrillten Kohlenstoffnanoröhrchendrähten besteht, die Ende-an-Ende verbunden und um eine axiale Richtung des Kohlenstoffnanoröhrchendrahts herum orientiert sind.

11. Elektrolytkondensator nach Anspruch 1, wobei die Kohlenstoffnanoröhrchenstruktur eine Vielzahl von Kohlenstoffnanoröhrchendrähten umfasst und die Kohlenstoffnanoröhrchendrähte Seite an Seite angeordnet, über Kreuz angeordnet, oder zusammengewellt sind.

12. Elektrolytkondensator nach Anspruch 11, wobei eine Vielzahl von Mikroporen von aneinanderliegenden gekreuzten oder gewellten Kohlenstoffnanoröhrchendrähten definiert sind, und ein Durchmesser der Mikroporen weniger als etwa 10 Mikrometer ist.

13. Elektrolytkondensator umfassend:
eine erste Elektrode;
eine zweite Elektrode gegenüber der ersten Elektrode, wobei zumindest eine von der ersten Elektrode und der zweiten Elektrode eine Kohlenstoffnanoröhrchenstruktur umfasst;
ein Separator, zwischen der ersten Elektrode und der zweiten Elektrode eingeschoben, und die gesamte erste Elektrode, die zweite Elektrode und der Separator befinden sich in einer Elektrolytumgebung; **dadurch gekennzeichnet, dass** die Kohlenstoffnanoröhrchenstruktur zumindest eine Kohlenstoffnanoröhrchenschicht oder zumindest einen Kohlenstoffnanoröhrchendraht umfasst, die
Kohlenstoffnanoröhrchenschicht oder zumindest ein Kohlenstoffnanoröhrchendraht durch Ziehen aus einer Anordnung von Kohlenstoffnanoröhrchen gebildet ist, und die Kohlenstoffnanoröhrchenschicht oder zumindest ein Kohlenstoffnanoröhrchendraht eine Vielzahl von aufeinanderfolgenden Kohlenstoffnanoröhrchen, Ende-an-Ende mittels Van-der-Waals-Anziehungskraft dazwischen verbunden, umfasst und die Kohlenstoffnanoröhrchen darin hauptsächlich entlang einer gleichen Richtung ausgerichtet sind.

## Revendications

1. Condensateur électrolytique (10) comprenant :
une première électrode (101) ;
une deuxième électrode (102) opposée à la première électrode (101), où au moins l'une de la première électrode (101) et de la deuxième électrode (102) comprend une structure de nanotubes de carbone ;
un séparateur (105) pris en tenaille entre la première électrode (101) et la deuxième électrode (102) ;
un contenant (107) recevant la première électrode (101), la deuxième électrode (102) et le séparateur (105) ; et
une solution électrolytique (106) dans un espace intérieur du contenant (107), et la première électrode (101), la deuxième électrode (102) et le séparateur (105) sont immergés dans la solution électrolytique (106) ;
**caractérisé en ce que** la structure de nanotubes de carbone comprend au moins un film de nanotubes de carbone ou au moins un fil de nanotubes de carbone, le film de nanotubes de carbone ou au moins un fil de nanotubes de carbone est formé par étirage à partir d'un réseau de nanotubes de carbone, et le film de nanotubes de carbone ou au moins un fil de nanotubes de carbone comprend une pluralité de nanotubes de carbone successifs reliés bout à bout par la force d'attraction de Van der Waals entre eux et les nanotubes de carbone dedans sont principalement alignés suivant une même direction.

2. Condensateur électrolytique selon la revendication 1, dans lequel la structure de nanotubes de carbone comprend au moins deux films de nanotubes de carbone empilés l'un sur l'autre et un angle entre les directions alignées des nanotubes de carbone dans les deux films de nanotubes de carbone adjacents est approximativement compris entre 0° et 90°.

3. Condensateur électrolytique selon la revendication 2, dans lequel l'angle entre les directions alignées des nanotubes de carbone dans les deux films de nanotubes de carbone adjacents est égal à 90° et une pluralité de micropores sont définis dans la structure de nanotubes de carbone et les diamètres des micropores sont approximativement compris entre 1 nanomètre et 500 nanomètres.

4. Condensateur électrolytique selon l'une quelconque des revendications 1 à 3, dans lequel le séparateur (105) est un matériau poreux isolant.

5. Condensateur électrolytique selon l'une quelconque des revendications 1 à 4, dans lequel la solution électrolytique (106) est une solution électrolytique aqueuse ou une solution électrolytique organique.

6. Condensateur électrolytique selon l'une quelconque des revendications 1 à 5, comprenant en outre un premier collecteur de courant (103) et un deuxième collecteur de courant (104), le premier collecteur de courant (103) est situé sur une surface de la première électrode (101) loin du séparateur (105) et le deuxième collecteur de courant (104) est situé sur une surface de la deuxième électrode (102) loin du séparateur (105).

7. Condensateur électrolytique selon l'une quelconque des revendications 2 à 6, dans lequel la structure de nanotubes de carbone comprend en outre au moins un fil de nanotubes de carbone et le fil de nanotubes de carbone est disposé sur au moins une surface du film de nanotubes de carbone.

8. Condensateur électrolytique selon la revendication 7, dans lequel la structure de nanotubes de carbone comprend une pluralité de fils de nanotubes de carbone, et les fils de nanotubes de carbone sont disposés côte à côte, disposés croisés ou ondulés ensemble.

9. Condensateur électrolytique selon l'une quelconque des revendications 7 et 8, dans lequel le fil de nanotubes de carbone est un fil de nanotubes de carbone non tordu, et le fil de nanotubes de carbone non tordu est composé d'une pluralité de nanotubes de carbone successifs reliés bout à bout et orientés suivant une même direction.

10. Condensateur électrolytique selon l'une quelconque des revendications 7 et 8, dans lequel le fil de nanotubes de carbone est un fil de nanotubes de carbone tordu, et le fil de nanotubes de carbone tordu est composé d'une pluralité de nanotubes de carbone tordus successifs reliés bout à bout et orientés autour d'une direction axiale du fil de nanotubes de carbone.

11. Condensateur électrolytique selon la revendication 1, dans lequel la structure de nanotubes de carbone comprend une pluralité de fils de nanotubes de carbone et les fils de nanotubes de carbone sont disposés côte à côte, disposés croisés ou ondulés ensemble.

12. Condensateur électrolytique selon la revendication 11, dans lequel une pluralité de micropores sont définis par des fils de nanotubes de carbone croisés ou ondulés adjacents et un diamètre des micropores est inférieur à environ 10 microns.

13. Condensateur électrolytique comprenant :
une première électrode ;
une deuxième électrode opposée à la première électrode, où au moins l'une des première et deuxième électrodes comprend une structure de nanotubes de carbone ;
un séparateur pris en tenaille entre la première électrode et la deuxième électrode, et l'ensemble de la première électrode, de la deuxième électrode et du séparateur sont situés dans un environnement électrochimique ;
**caractérisé en ce que** la structure de nanotubes de carbone comprend au moins un film de nanotubes de carbone ou au moins un fil de nanotubes de carbone, le film de nanotubes de carbone ou au moins un fil de nanotubes de carbone est formé par étirage à partir d'un réseau de nanotubes de carbone, et le film de nanotubes de carbone ou au moins un fil de nanotubes de carbone comprend une pluralité de nanotubes de carbone successifs reliés bout à bout par la force d'attraction de Van der Waals entre eux et les nanotubes de carbone dedans sont alignés principalement suivant une même direction.
